# EUROPEAN PATENT APPLICATION

(11) **EP 4 273 764 A1**
(43) Date of publication of application: **08.11.2023**
(21) Application number: 22811200.9
(22) Date of filing: 17.05.2022
(51) Int. Cl.: G06N 20/00

(54) **CLASSIFICATION SYSTEM**

(30) Priority: 28.05.2021 JP 2021090541
(71) Applicant: Iryou Jyouhou Gijyutu Kenkyusho Corporation, Yame-gun, Fukuoka 834-0115 (JP)
(72) Inventor: Himeno Shinkichi, Yame-gun Fukuoka 834-0102 (JP)
(74) Representative: Gulde & Partner
(86) International application number: PCT/JP2022/020478
(87) International publication number: WO 2022/249927

(57) **Abstract**

[Problem] Provided is a classification system that outputs classification results of data to be classified and factor scores corresponding to eigenvectors of a correlation index matrix together so that the validity of the classification results can be examined.

[Solving Means] The classification system includes correlation index matrix creation means configured to obtain correlation indexes of combinations of elements forming classification training data and to convert the correlation indexes into a matrix form and correlation index matrix eigenvector calculation means configured to obtain eigenvectors from the correlation index matrix. Data-to-be-classified acquisition means newly inputs data to be classified, to trained classification means, and classification result output means included in the trained classification means outputs classification results of the data to be classified and factor scores corresponding to eigenvectors of a corresponding correlation index matrix together so that validity of the classification results can be examined.

## Description

### TECHNICAL FIELD

The present invention relates to a classification system that determines which class an obtained image or observation data belongs to using a great amount of imagery, observation data, or the like (so-called "big data").

### BACKGROUND ART

The development and widespread use of the Internet and the development of the technology called "cloud" that stores and parallel computes large-capacity data have enabled processing of a great amount of data, which was previously impossible. Classification systems that constructs a classifier by processing (training) a large number of combinations of images, observation data, or the like and the correct classes thereof (training data) and estimate the class that the a newly obtained image or observation data belongs to have been rapidly developed, particularly, in the wake of the advent of the technique called deep learning.

In the field of image recognition, technologies that identify a person or read the emotion of the person, such as anger or sadness, from an image of the person's face have evolved. In the field of object recognition, technologies that estimate the type of an object on an image have evolved. In the field of medicine, technologies that identify the presence of a cancer or the like from a medical image, such as X-ray, CT, or microscopic image, have been actively studied.

Similarly, technologies that perform deep learning using a great amount of financial data or economic data and determine the credibility of corporations or predict rises and falls in the stock price have been actively studied. Also in the field of medicine, technologies that predict the disease name of a patient having a certain symptom or finding or estimate an effective treatment using a great amount of data on the symptoms or laboratory findings of many patients have been studied.

Background art literature relating to the present application includes the following.

### Citation List

### Patent Literature

[Patent Literature 1] Japanese Unexamined Patent Application Publication No. 2018-175226
[Patent Literature 2] Japanese Unexamined Patent Application Publication No. 2019-3396
[Patent Literature 3] Japanese Unexamined Patent Application Publication No. 2019-106090
[Patent Literature 4] Japanese Unexamined Patent Application Publication No. 2019-82883 (literature describing a well-known technology)
[Patent Literature 5] International Publication No. 2017/168865 (literature describing a well-known technology)
[Patent Literature 6] Japanese Unexamined Patent Application Publication No. 2013-77127
[Patent Literature 7] International Publication No. 2020/179764
[Patent Literature 8] Japanese Patent No. 6792751

### SUMMARY OF INVENTION

### Technical Problem

Deep learning and the like use a neural network consisting of many layers. Even if a recognition result is obtained, it is difficult for a human to understand why such a recognition result has been obtained.

Although the recognition accuracy has been increased, it is not 100%. Accordingly, misrecognition inevitably occurs and the user is responsible for the misrecognition.

At this time, the user has to be able to explain to third parties why such recognition has been reached. Otherwise, the user would suffer a risk, such as compensation for damage. Thus, there is a limit to the practical utility of deep learning and the like.

Also, there has been an illusion as if all problems were solved by analyzing big data.

In each field, however, a thinking framework having high utility has been created over a long period of time. If all data is flattened and analyzed without previously assuming any internal logic structure, it is often that already known ordinary knowledge is simply reconfirmed or an indefinable correlation is simply pointed out, even if the amount of data is large.

Japanese Unexamined Patent Application Publication No. 2019-106090 determines the presence or absence of defects in multiple types of objects (workpieces) by first performing training for identifying the types of workpieces and then performing defect presence/absence determination training specialized in the identified types of workpieces. Thus, this technology attempts to determine the presence or absence of defects at a high rate even in a work environment in which multiple types of workpieces coexist.

Japanese Unexamined Patent Application Publication No. 2019-82883 performs training as to which classes objects belong to using deep learning and previously stores the representative feature value of each class and a frequent feature value frequently observed in the class. When classifying a certain object, this technology compares the obtained feature value with the previously stored class-specific representative feature values and the frequent feature values and regards the most approximate class as an estimated class. At this time, this technology also uses attributes of an object corresponding to a matching frequent feature value as a ground for the inference of the class.

International Publication No. 2017/168865 constructs an inference mechanism by performing deep learning using a first data set consisting of an input and an output (correct answer). This technology then applies, to the trained inference mechanism, a previously prepared second data set that differs from the first data set in only a part of the input. This technology then examines the influence that the input different in only the part has on the output and represents the influence using a graph or the like. Thus, this technology attempts to clarify the correspondence between the input and output and give a meaning to or explain the output.

The accuracy of inference or determination has been drastically improved by deep learning compared to that of conventional technologies.

However, the correct answer rate cannot be 100% due to inference being a stochastic process and false inference necessarily occurs at a certain rate.

In this case, unless the user can explain why the user has made the inference, that is, can present the ground for the inference, the user would have difficulty in defending themself and be completely responsible for the inference.

Also, it would be difficult to improve accuracy as long as the reason why the false inference has been made is unknown.

Moreover, it is difficult to estimate causality in deep learning in principle, since neural elements consisting of multiple layers are used.

To solve the above problems, attempts have been made to obtain an inference and a ground for the inference together. For example, Japanese Unexamined Patent Application Publication No. 2019-82883 attempts to obtain a ground for explanation by associating frequent feature values and attributes and listing the attributes of a class estimated from a representative feature value.

However, a corresponding attribute in the input layer estimated from a firing intermediate neuron corresponding to a frequent feature value is not a directly proven attribute. Moreover, the relationships between frequent feature values and the attributes of a class are often unknown or uninterpretable.

International Publication No. 2017/168865 applies data sets that differ from each other in only some of input elements to a trained inference device and estimates the influence that the different input elements have on the output, from changes in the output made by the different input elements. However, it is not easy to obtain the "data sets that differ from each other in only some of input elements" in some cases.

In any of the above references, the inference device is trained using, as training data corresponding to an input pattern, only one actual measured value such as a class or rent. After making inference, the trained inference device estimates the attributes of the obtained class from the influence range of an intermediate neuron firing near the output, or changes only a part of the input pattern and estimates the meaning or attributes of the changed input pattern from a change in the output.

As seen above, in the conventional technologies, the inference device is trained using, as training data corresponding to an input pattern, only one actual measured value such as a class or rent, and attributes are estimated after inference is made.

Japanese Patent No. 6792751 provides a classification system that performs training using not only correct classes but also the correct attributes of the classes as training data and thus, when a certain image or the like is presented, causes the classifier to output not only the estimated class of the image but also estimated attributes of the class so that a ground for the class is estimated.

This classification system is provided with check means (attribute list-based correct class estimation means) configured to check the obtained list of attributes of the class against a previously constructed class-specific attribute database (class-specific attribute list management means) and thus checks the validity of the class and allows a user to systematically explain a ground for the class.

This classification system trains an inference device using not only classes but also the known attributes of the classes as training data corresponding to the input patterns. When an input pattern is given to the trained inference device, the inference device directly outputs not only the class thereof but also an estimated attribute value simultaneously. Thus, the class and the attribute serving as a ground for the class are obtained simultaneously and directly.

However, when training the inference device, this classification system has to give both correct classes and a list of correct attributes to the inference device as training data. Creating such training data disadvantageously takes effort and cost.

The present invention has been made to solve the above problems, and an object thereof is to provide a classification system that includes correlation index matrix creation means configured to obtain correlation indexes of combinations of elements forming classification training data and to convert the correlation indexes into a matrix form and (ii) correlation index matrix eigenvector calculation means configured to obtain eigenvectors from the correlation index matrix. Data-to-be-classified acquisition means newly inputs data to be classified, to trained classification means, and classification result output means included in the trained classification means outputs classification results of the data to be classified and factor scores corresponding to eigenvectors of a corresponding correlation index matrix together so that validity of the classification results can be examined. This eliminates the need to create a list of correct attributes, which has been required for training.

Thus, a user of an inference device according to the present invention is able to obtain classes inferred from the inputted data to be classified along with factor scores serving as a ground and thus to use the classes with confidence. Even if any of the inferred classes is wrong, the user is able to defend themself with force majeure, since the user has also obtained the factor scores serving as a ground for the inference. Other possible classes can also be estimated from the factor scores.

### Solution to Problem

As means for accomplishing the above object, a classification system of claim 1 includes classification training data management means configured to obtain classification training data, classification training data-based correct class setting means configured to set correct classes on the basis of the classification training data, classification means configured to receive and classify the classification training data, classification result output means configured to output classification results, classification training means configured to train the classification means by comparing the classification results and the correct classes previously set by the classification training data-based correct class setting means and feeding back an error, (i) correlation index matrix creation means configured to obtain correlation indexes of combinations of elements forming the classification training data and to convert the correlation indexes into a matrix form, and (ii) correlation index matrix eigenvector calculation means configured to obtain eigenvectors from the correlation index matrix. Data-to-be-classified acquisition means newly inputs data to be classified, to the trained classification means, and the classification result output means included in the trained classification means outputs classification results of the data to be classified and factor scores corresponding to eigenvectors of a corresponding correlation index matrix together so that validity of the classification results can be examined.

According to a classification system of claim 2, in the classification system of claim 1, the correlation index matrix eigenvector calculation means may include correlation index matrix eigenvector coordinate axis conversion means configured to convert coordinate axes of the eigenvectors of the correlation index matrix so that relationships between the elements forming the classification training data and the eigenvectors of the correlation index matrix can be easily understood.

According to a classification system of claim 3, in the classification system of claim 1 or 2, the correlation indexes obtained by the correlation index matrix creation means may be one of correlation coefficients, covariances, and co-occurrence frequencies, and the correlation index matrix creation means may include one of correlation coefficient calculation means, covariance calculation means, and co-occurrence frequency calculation means.

According to a classification system of claim 4, in the classification system of claim 3, the co-occurrence frequency calculation means may include general-purpose co-occurrence frequency calculation means configured to count, as a co-occurrence frequency, the number of one of (i) cases in which two elements of attention of the elements forming the classification training data are both positive, (ii) cases in which the two elements are both negative, (iii) cases in which one of the two elements is positive and the other is negative, (ii) indicating exclusive OR, and (iv) any combination of (i) to (iii).

### Advantageous Effects of Invention

The classification system of claim 1 includes the correlation index matrix creation means and thus obtains correlation indexes of combinations of elements forming the classification training data and converts the correlation indexes into a matrix form.

The classification system of claim 1 includes the correlation index matrix eigenvector calculation means and thus obtains eigenvectors from the correlation index matrix.

The classification system of claim 1 includes classification result output means and thus outputs classification results of the data to be classified and factor scores corresponding to eigenvectors of a corresponding correlation index matrix together so that validity of the classification results can be examined.

The classification system of claim 2 includes the correlation index matrix eigenvector coordinate axis conversion means and thus converts coordinate axes of the eigenvectors of the correlation index matrix so that relationships between the elements forming the classification training data and the eigenvectors of the correlation index matrix can be easily understood.

In the classification system of claim 3, the correlation indexes are one of correlation coefficients, covariances, and co-occurrence frequencies, and the correlation index matrix creation means includes one of correlation coefficient calculation means, covariance calculation means, and co-occurrence frequency calculation means.

In the classification system of claim 4, the co-occurrence frequency calculation means includes the general-purpose co-occurrence frequency calculation means configured to count, as a co-occurrence frequency, the number of one of (i) cases in which two elements of attention of the elements forming the classification training data are both positive, (ii) cases in which the two elements are both negative, (iii) cases in which one of the two elements is positive and the other is negative, (ii) indicating exclusive OR, and (iv) any combination of (i) to (iii).

### BRIEF DESCRIPTION OF DRAWINGS

FIG. 1A is a schematic drawing of a classification system according to the present invention and shows a state in which training for classification is being performed.
FIG. 1B is a schematic drawing of the classification system according to the present invention and shows a state in which classification is being performed.
FIG. 2 is a diagram showing that the coordinate axis of the eigenvector of a correlation index matrix is converted so that the attributes of factors become clearer.
FIG. 3 is a diagram showing that cooccurrence frequency calculation means is handling the co-occurrence frequency of the positivity and negativity of two elements of attention.

### DESCRIPTION of EMBODIMENTS

A classification system according to the present invention includes a server device, a database, and a terminal.

The server device is a known computer device and includes an arithmetic unit, main memory, auxiliary storage, an input unit, an output unit, and a communication unit.

The arithmetic unit, main memory, auxiliary storage, input unit, output unit, and communication unit are connected to each other through a bus interface.

The arithmetic unit includes a known processor capable of executing an instruction set.

The main memory includes a volatile memory such as RAM capable of temporarily storing an instruction set.

The auxiliary storage includes a non-volatile data storage capable of storing an OS and programs.

The data storage may be, for example, an HDD or SSD.

The input unit is, for example, a keyboard.

The output unit is, for example, a display such as an LCD.

The communication unit includes a network interface connectable to a network.

The server device includes means such as classification training data management means, correct class setting means, classification result output means, classification training means, correlation index matrix creation means, correlation index matrix eigenvector calculation means, data-to-be-classified acquisition means, trained classification means, correlation index matrix eigenvector coordinate axis conversion means, correlation coefficient calculation means, covariance calculation means, co-occurrence frequency calculation means, and general-purpose co-occurrence frequency calculation means.

The processor of the server device performs these means.

The database according to the present invention may be included in the auxiliary storage of the server device, or may be included in different auxiliary storage independent of the server device.

The database stores information handled by a classification management system.

As with the server device, the terminal according to the present invention has the hardware configuration of a known computer.

The server device, database, and terminal according to the present invention are able to communicate with each other through a network.

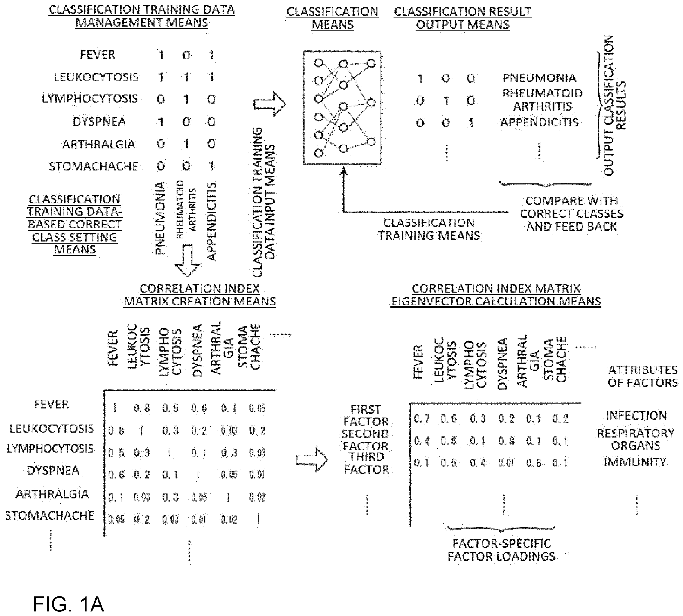

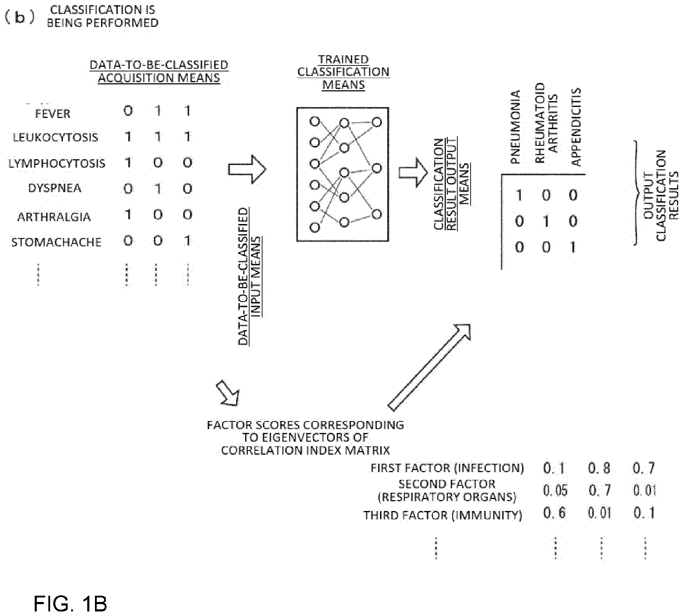

FIGS. 1A and 1B are schematic drawings of the classification system according to the present invention. FIG. 1A shows a state in which training for classification is being performed, and FIG. 1B shows a state in which classification is being performed.

In FIG. 1A, data on patient-specific symptoms and findings, which is data to be classified, is managed by the classification training data management means.

A disease name that is a correct answer is given to data on each patient by the correct class setting means.

These pieces of data are provided to the classification means through classification training data input means.

The data to be classified may be acquired using any method such as reading from electronic health records, any observation data file, or a time-series data file.

The symptoms and findings, which are classification training data, are inputted to the input layer of the classification means (classification training data input means).

The classification means connects many hidden layers including neural elements imitating neurons using weighted links and calculates the weighted links sequentially from the input layer.

The amount of stimulation to a neural element is summed up on the basis of the presence or absence of firing of links in the preceding stage of the neural element and the weights of the links. When a preset threshold is exceeded, the neural element fires and produces weighted outputs to the neural elements in the subsequent hidden layer.

The last layer of the classification means produces classification result outputs, and firing of the respective neural elements in this output layer corresponds to the respective classification result outputs.

The classification result outputs are compared with disease names that are correct classes set by classification training data-based correct class setting means. If both are not matched, the errors are fed back to the classification means using a technique such as backpropagation and the weights of the links are adjusted so that the outputs come close to the correct classes. When the errors become equal to or smaller than a preset reference, the training of the classification means is completed (trained classification means).

In the present invention, the correlation indexes between elements such as symptoms and findings are calculated and organized into a matrix form (correlation index matrix creation means).

In FIG. 1A, correlation coefficients are used as correlation indexes.

Eigenvectors are calculated from the created correlation index matrix (correlation index matrix eigenvector calculation means).

Factors are referred to as a first factor, a second factor, and the like in the descending order of the size of the eigenvalue, and the correlation coefficients (factor loadings) of the symptoms and findings are obtained for each factor.

By checking which symptom or finding has a larger factor loading for each factor, the attributes of the factors such as infection, respiratory disease, and immunity can be estimated.

FIG. 1B shows a state in which classification is being performed.

When performing classification, symptoms and findings, which are data to be classified managed by data-to-be-classified management means, are inputted to the trained classification means using data-to-be-classified input means.

The individual neural elements that have fired in the classification result output means correspond to classification results.

Further, in the present invention, the factor scores of each classification target are calculated from the presence or absence of the symptoms and findings, which are the data to be classified, and the sum of products of the factor loadings of the factors. As described above, the attributes of the factors such as infection, respiratory disease, and immunity have been estimated. For this reason, when one classification result has a high score of one factor, this means that the factor has a large attribute. As seen above, the classification results of the data to be classified and the factor scores corresponding to the eigenvectors of the correlation index matrix are outputted together so that the validity of the classification results can be examined.

The conventional methods only present the classification results. Accordingly, the reason why such classification results have been obtained is unknown. On the other hand, in the present invention, not only the classification results but also the factor scores corresponding to the eigenvectors of the correlation index matrix are outputted so that the validity of the classification results can be examined in comparison between both.

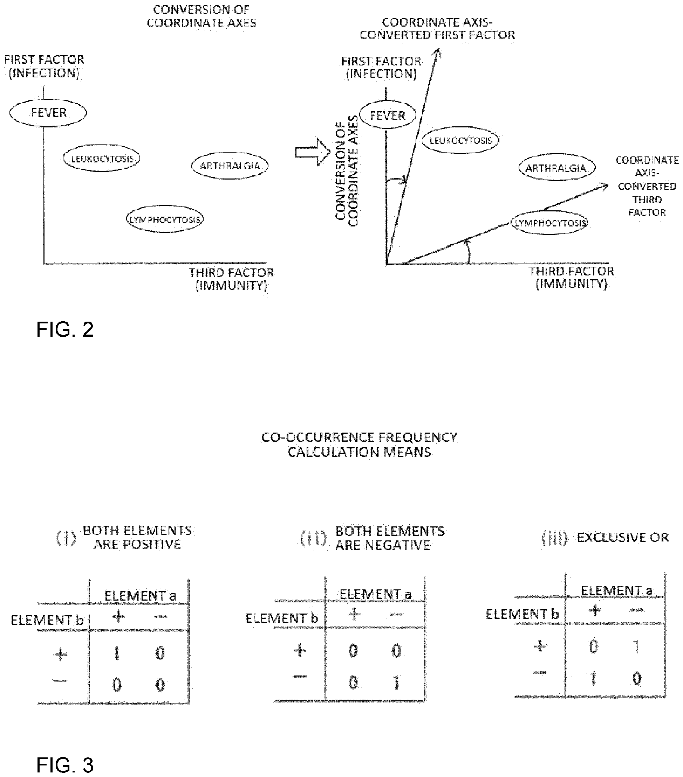

FIG. 2 is a diagram showing that the coordinate axes (factor axes) of the eigenvectors of the correlation index matrix are converted so that the attributes of the factors become clearer.

The eigenvectors form a Cartesian coordinate system where the eigenvectors are independent of each other (correlation coefficient=0). The factor axes are not absolute and vary with the combination or balance of the constituting elements and thus the meaning thereof ("the attributes of the factors" in the present invention) becomes ambiguous in some cases.

For this reason, it may be useful to convert the factor axes so that the attributes of the factors become clearer. It is greatly advantageous that the attributes of the factor axes become clearer when the Cartesian relationship between the factor axes is broken.

One of correlation coefficients, covariances, and co-occurrence frequencies is used as an example of the correlation indexes.

The correlation coefficients and covariances are the same as those in general statistics and therefore there would be no need to explain them.

The co-occurrence frequencies are obtained by calculating the frequency with which two elements (symptoms or findings in this example) of attention are observed simultaneously (co-occurrence frequency calculation means).

Generally, the number of (i) only cases in which both elements are positive is counted. However, depending on the disease name, (ii) it may be meaningful that both elements are negative.

Further, (iii) it may be meaningful that only one of both is positive or negative (exclusive OR).

A combination of (i) and (ii) corresponds to a positive correlation coefficient, and (ii) corresponds to a negative correlation coefficient, (i) and (ii) may be combined when necessary.

Note that the number of types of elements such as symptoms or findings amounts to several thousand and therefore there are actually many pieces of data indicating negativity or having no description.

Cases in which both elements are negative may be extremely large in number.

In such a case, it is preferable to perform a narrowing operation such as counting the number of only cases in which one element is positive and the other element is negative or counting the number of only cases in which the same element is observed as positive at a certain rate.

While an embodiment has been described above, the specific configuration of the present invention is not limited to the embodiment. Design changes and the like are also included in the present invention without departing from the spirit and scope of the invention.

For example, while the symptoms and findings are represented by + and - in the diagram to simplify the description, they may be represented by numbers. While the classification of disease names in the field of medicine has been used as an example, the present invention may be used for the evaluation of credit default risk, the prediction of crop yield, the determination of non-defective products, or other purposes.

While deep learning, which is currently spreading rapidly, has been used as an example of the classification means, this example is not limiting. Even if an appropriate classifier, such as classification means using a neural network that has been used or will appear in the future, various types of machine learning such as a support vector machine, or classification means using a frequency distribution, is used in accordance with the situation, the present invention can be carried out as well.

## Claims

1. A classification system comprising:
classification training data management means configured to obtain classification training data;
classification training data-based correct class setting means configured to set correct classes on the basis of the classification training data;
classification means configured to receive and classify the classification training data;
classification result output means configured to output classification results;
classification training means configured to train the classification means by comparing the classification results and the correct classes previously set by the classification training data-based correct class setting means and feeding back an error;
(i) correlation index matrix creation means configured to obtain correlation indexes of combinations of elements forming the classification training data and to convert the correlation indexes into a matrix form; and
(ii) correlation index matrix eigenvector calculation means configured to obtain eigenvectors from the correlation index matrix,
wherein data-to-be-classified acquisition means newly inputs data to be classified, to the trained classification means, and
wherein the classification result output means included in the trained classification means outputs classification results of the data to be classified and factor scores corresponding to eigenvectors of a corresponding correlation index matrix together so that validity of the classification results can be examined.

2. The classification system of claim 1, wherein
the correlation index matrix eigenvector calculation means comprises correlation index matrix eigenvector coordinate axis conversion means configured to convert coordinate axes of the eigenvectors of the correlation index matrix so that relationships between the elements forming the classification training data and the eigenvectors of the correlation index matrix can be easily understood.

3. The classification system of claim 1 or 2,
wherein the correlation indexes obtained by the correlation index matrix creation means are one of correlation coefficients, covariances, and co-occurrence frequencies, and
wherein the correlation index matrix creation means comprises one of correlation coefficient calculation means, covariance calculation means, and co-occurrence frequency calculation means.

4. The classification system of claim 3, wherein
the co-occurrence frequency calculation means comprises general-purpose co-occurrence frequency calculation means configured to count, as a co-occurrence frequency, the number of one of (i) cases in which two elements of attention of the elements forming the classification training data are both positive, (ii) cases in which the two elements are both negative, (iii) cases in which one of the two elements is positive and the other is negative, (ii) indicating exclusive OR, and (iv) any combination of (i) to (iii).
